Europäisches Patentamt

European Patent Office

Office européen des brevets

(11) Veröffentlichungsnummer: **0 459 262 A2**

## (12) EUROPÄISCHE PATENTANMELDUNG

(21) Anmeldenummer: 91108113.1

(22) Anmeldetag: 18.05.91

(51) Int. Cl.⁵: **G01M 13/00**

(30) Priorität: 30.05.90 DE 4017376

(43) Veröffentlichungstag der Anmeldung:
**04.12.91 Patentblatt 91/49**

(84) Benannte Vertragsstaaten:
**AT CH DE FR GB IT LI**

(71) Anmelder: **Bodenseewerk Gerätetechnik GmbH**
**Alte Nussdorfer Strasse 15 Postfach 1120**
**W-7770 Überlingen/Bodensee(DE)**

(72) Erfinder: **Schmid, Jürgen**
**Sautenlehen 5**
**W-7777 Salem-Weildorf(DE)**
Erfinder: **Keferstein, Claus, Dr.-Ing.**
**Jasminweg 13 a**
**W-7770 Überlingen(DE)**
Erfinder: **Drodofski, Stefan, Dipl.-Ing.**
**Im Gunzinger 6**
**W-7753 Allensbach(DE)**

(74) Vertreter: **Wolgast, Rudolf, Dipl.-Chem. Dr. et al**
**Dipl.-Phys. Jürgen Weisse Dipl.Chem. Dr. Rudolf Wolgast Bökenbusch 41 Postfach 11 03 86**
**W-5620 Velbert 11 Langenberg(DE)**

(54) **Gewindeprüfeinrichtung.**

(57) Bei einer Gewindeprüfeinrichtung zur Prüfung von Innengewinden mittels eines in das Innengewinde einzuschraubenden Gewindewerkzeugs ist die Werkzeughalterung (100) über eine Kupplung (60) mit dem Antriebsmotor (26) gekuppelt, welche bei einer dem Einschraubvorgang entsprechenden Drehbewegung bei Überschreiten eines vorgegebenen Drehmoments federnd nachgibt und dadurch den Drehimpuls der umlaufenden Teile federnd aufnimmt. Die Kupplung (60) ist drehbar in einem Zwischenteil (34) gelagert. Das Zwischenteil (34) ist ausrichtbar in dem Gehäuse (10) abgestützt. Eine antriebseitige Kupplungshälfte (58) der Kupplung (60) über das Getriebe (124) in Form einer Kugelsechskantkupplung ausrichtbar mit dem Antriebsmotor (26) verbunden.

Fig. 1

## Technisches Gebiet

Die Erfindung betrifft eine Gewindeprüfeinrichtung zur Prüfung von Innengewinden mittels eines in das Innengewinde einzuschraubenden Gewindewerkzeugs, enthaltend

(a) ein Gehäuse,

(b) Werkzeughalterungsmittel zur Halterung des Gewindewerkzeugs, die drehbar und winkelmäßig ausrichtbar gelagert sind,

(c) einen Antriebsmotor,

(d) ein Getriebe, über welches der Antriebsmotor mit den Werkzeughalterungsmitteln gekuppelt ist und welches die Ausrichtung der Werkzeughalterungsmittel zuläßt, und

(e) Mittel zur Messung des von dem Antriebsmotor über das Getriebe und die Halterung auf das Gewindewerkzeug übertragenen Drehmoments.

## Zugrundeliegender Stand der Technik

Die Prüfung von Innengewinden soll nach DIN 13 Teil 18 folgendermaßen erfolgen: Der Gewinde-Gutlehrdorn soll sich von Hand ohne Anwendung besonderer Kraft in die ganze Länge des Werkstückgewindes einschrauben lassen. Ist dies nicht möglich, dann genügt das Werkstückgewinde nicht den Anforderungen. Der Gewinde-Ausschußdorn darf sich von Hand ohne Anwendung besonderer Kraft in das Werkstückgewinde von beiden Seiten nicht mehr als zwei Umdrehungen einschrauben lassen. Läßt er sich mehr als zwei Umdrehungen einschrauben, genügt das Gewinde den Anforderungen nicht.

Durch einen Aufsatz von Kampa, Kring und Edel "Flexibles, rechnergestütztes Meßgerät zum Prüfen von Innengewinden" in "Technisches Messen" 52, 465 ff ist eine Gewindeprüfeinrichtung bekannt, welche eine solche Prüfung zu automatisieren gestattet. Ein Lehrdorn ist so gelagert, daß er gegenüber einem Gehäuse sowohl in seiner Position als auch in seiner Winkellage begrenzt beweglich ist und sich so an die Lage und Orientierung des zu prüfenden Werkstückgewindes anpassen kann. Dadurch werden die auf den Lehrdorn senkrecht zur Gewindeachse wirkenden Kräfte gering gehalten. Der Lehrdorn wird von einem Antriebsmotor über ein Kardangetriebe angetrieben. Es werden Funktion, Position, Achslage und Tiefe des Werkstückgewindes gemessen. Zur Funktionsprüfung wird der Drehmomentverlauf während des Einschraubvorganges bestimmt. Diese Vorrichtung ist auch aus der DE-OS 35 34 115 bekannt.

Die bekannte Gewindeprüfeirichtung ist ziemlich schwer. Das bringt Probleme mit sich, wenn die Gewindeprüfeinrichtung von einem Roboter geführt werden soll. Auch sind mit dem Lehrdorn erhebliche umlaufende Massen verbunden. Diese umlaufenden Massen bedingen einen Drehimpuls. Wenn der Lehrdorn auf Widerstand trifft, bewirkt der Drehimpuls ein zusätzliches Festziehen und u.U. Verkeilen des Gewindelehrdornes in dem Werkstückgewinde. Es ist dann ein zusätzliches Drehmoment beim Herausschrauben des Lehrdornes aus dem Werkstückgewinde erforderlich.

Aus der DE-PS 36 22 497 ist eine Lehrdorn-Durchgangsmaschine zum Prüfen eines horizontal gelagerten Rohres auf freien Durchgang bekannt, in dem ein Antrieb über eine Stange einen Lehrdorn verschiebt. Zwischen dem Lehrdorn, einem mit diesem verbundenen Kraftmessglied und der Stange sind als Dämpfungselemente dienende Gummiblöcke angeordnet, durch die Stösse von dem verhältnismässig empfindlichen Kraftmessglied ferngehalten werden können. Ausserdem sind beiderseits des Kraftmessgliedes starr durch Stifte verbundene Kupplungen angeordnet, die zur Längsführung der Anordnung dienen können. Drehbewegungen dieser aus Lehrdorn, Kraftmessglied und Schubstange bestehenden Anordnung finden ebensowenig statt wie Übertragung, Messung und Begrenzung von Drehmomenten.

Die DE-PS 31 03 761 beschreibt seine selbstjustierende Prüfvorrichtung zum Prüfen von nicht mit einem Gewinde versehenen Öffnungen, insbesondere zylindrischen Bohrungen. Hier wird ein in die Bohrung einführbarer Prüfkopf um die Bohrungslängsachse gedreht, ohne dass jedoch Vorrichtungen zur Messung oder Begrenzung des Drehmomentes vorgesehen sind.

## Offenbarung der Erfindung

Der Erfindung liegt die Aufgabe zugrunde, bei einer Gewindeprüfeinrichtung der eingangs genannten Art ein Festziehen des Lehrdornes in dem Werkstückgewinde infolge des Drehimpulses der umlaufenden Massen zu vermeiden.

Weiterhin sollen die mit dem Lehrdorn umlaufenden Massen gering gehalten werden. Auch das Gewicht der Gewindeprüfeinrichtung soll gering gehalten werden. Insbesondere soll die Gewindeprüfeinrichtung von einem Roboter handhabbar sein.

Erfindungsgemäß wird die oben angegebene Aufgabe dadurch gelöst, daß

(f) die Werkzeughalterungsmittel über eine Kupplung mit dem Antriebsmotor gekuppelt sind, welche bei einer dem Einschraubvorgang entsprechenden Drehbewegung bei Überschreiten eines vorgegebenen Drehmoments federnd nachgibt und dadurch den Drehimpuls der umlaufenden Teile federnd aufnimmt.

Bei einer bevorzugten Ausführung ist die Kupplung drehbar in einem Zwischenteil gelagert. Das Zwischenteil ist ausrichtbar in dem Gehäuse abgestützt. Eine antriebseitige Kupplungshälfte der Kupplung ist über das Getriebe ausrichtbar mit dem Antriebsmotor verbunden. Das Getriebe ist eine Kugelsechskantkupplung. Das Gehäuse verjüngt sich werkzeugseitig konisch und bildet auf seiner Innenseite eine konische Sitzfläche. Das Zwischenteil ist mit einer entsprechend konischen Außenfläche auf die konische Sitzfläche des Gehäuses aufsetzbar. An dem Zwischenteil greifen federnde Druckglieder an, welche das Zwischenteil an die konische Sitzfläche anzudrücken suchen. Die federnden Druckglieder sind von verschiebbar in dem Gehäuse geführten Stangen gebildet, die jeweils mit einem verdickten tastkopf an dem Zwischenteil anliegen. Die Stangen sind von vorgespannten Schraubenfedern umgeben, welche sich an einem Widerlager im Gehäuse und an den Tastköpfen abstützen.

Die federnd nachgiebige Kupplung weist eine abtriebseitige Kupplungshälfte in Form einer drehbar gelagerten Scheibe auf, welche um die Drehachse herum bogenförmige Durchbrüche aufweist, sowie eine antriebseitige Kupplungshälfte mit Mitnahmegliedern, welche durch die bogenförmigen Durchbrüche der abtriebseitigen Kupplungshälfte hindurchragen, und vorgespannte Federglieder, welche sich an der abtriebseitigen Kupplungshälfte abstützen und die Mitnahmeglieder der antriebseitigen Kupplungshälfte in federnder Anlage an jeweils einer Endwandung der bogenförmigen Durchbrüche halten. Die antriebseitige Kupplungshälfte bildet ein flaches Gehäuse, welches die abtriebseitige Kupplungshälfte umschließt und zwischen dessen Stirnflächen sich die Mitnahmeglieder erstrecken. Dieses Gehäuse ist in dem Zwischenteil über Wälzlager drehbar gelagert. Die abtriebseitige Kupplungshälfte ist in dem Gehäuse über Gleitlager gelagert. Die abtriebseitige Kupplungshälfte ist von einem Flansch an den Werkzeughalterungsmitteln gebildet. Die Werkzeughalterungsmittel sind in dem Zwischenstück in einem Wälzlager gelagert.

Es sind Fühler zum Abgreifen der Bewegung des Zwischenteils relativ zu dem Gehäuse vorgesehen.

## Kurze Beschreibung der Zeichnungen

Fig.1 zeigt eine Seitenansicht, teilweise im Schnitt einer Gewindeprüfeinrichtung zur Prüfung von Innengewinden mittels eines Lehrdornes.

Fig.2 zeigt einen Schnitt längs der Linie A - A von Fig.1.

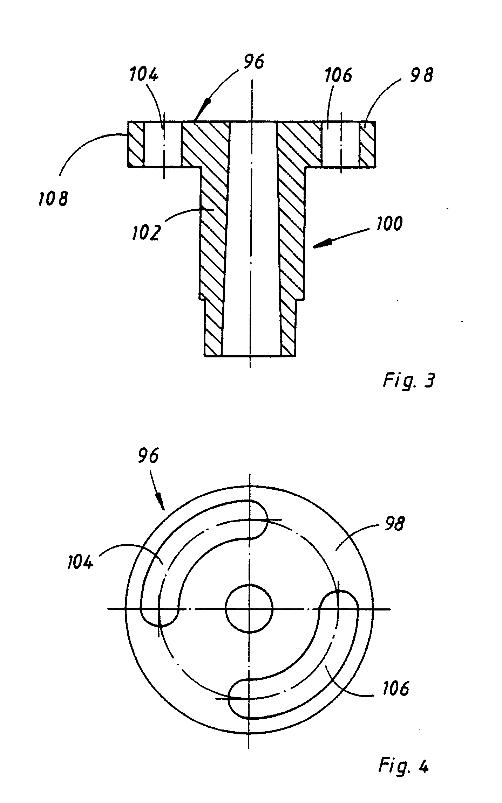

Fig.3 zeigt einen Längsschnitt durch die abtriebseitige Kupplungshälfte einer drehimpulsaufnehmenden Kupplung mit angeformten Werkzeughalterungsmitteln bei der Gewindeprüfeinrichtung von Fig.1.

Fig.4 ist eine zugehörige Draufsicht.

Fig.5 zeigt einen Schnitt durch die gehäuseartige, antriebseitige Kupplungshälfte der drehimpulsaufnehmenden Kupplung.

Fig.6 zeigt eine Draufsicht des oberen Teils dieser Kupplungshälfte.

Fig.7 ist eine Seitenansicht einer Kugelsechskantkupplung bei der Gewindeprüfeinrichtung von Fig.1.

Fig.8 zeigt, teilweise im Schnitt, einen Kardanteil bei der Kugelsechskantkupplung von Fig.7.

Fig.9 ist eine Endansicht der Sechskanthülse in dem Kardanteil von Fig.8.

Fig.10 ist eine Endansicht einer auf der Welle des Antriebsmotors sitzenden, mit dem Kardanteil von Fig.8 zur Bildung der Kugelsechskantkupplung zusammenwirkenden Hülse.

Fig.11 zeigt den Einsatz der Gewindeprüfeinrichtung von Fig.1 an einem Arbeitsplatz mit einem Roboter.

Fig.12 zeigt schematisch eine Weiterbildung der Gewindeprüfeinrichtung, durch welche die Lage der zu prüfenden Gewindebohrung feststellbar ist.

## Bevorzugte Ausführung der Erfindung

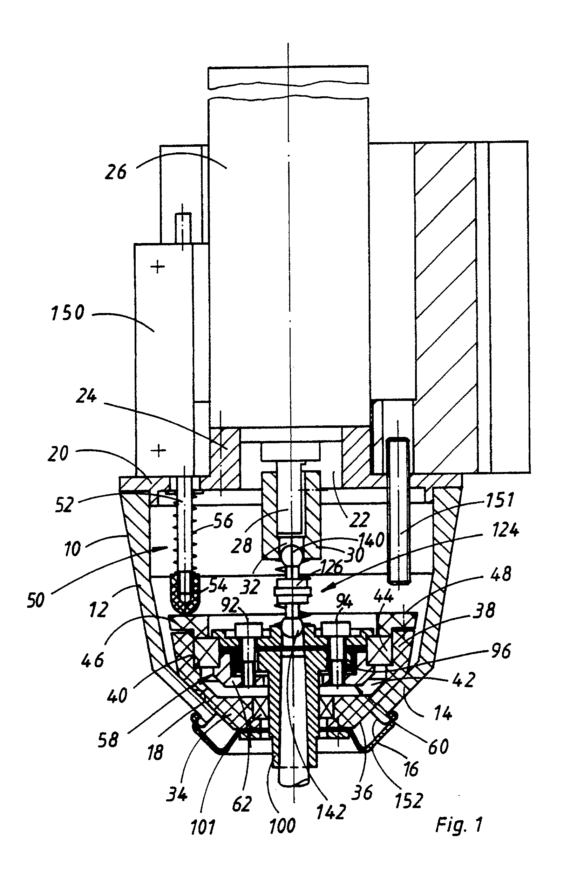

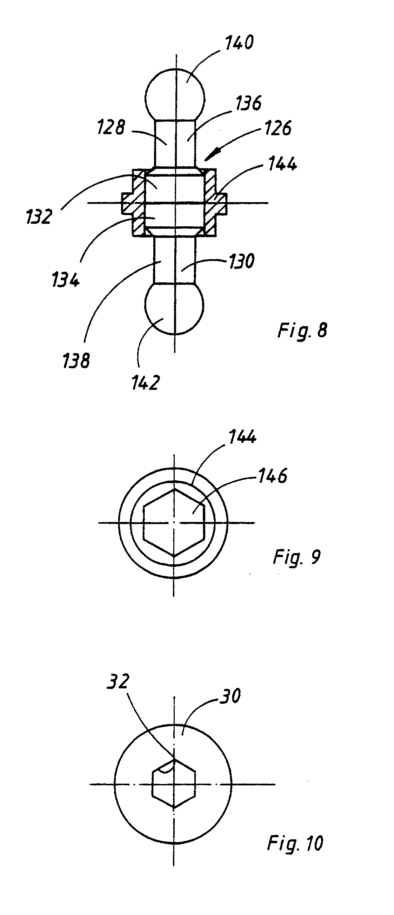

In Fig.1 ist mit 10 ein Gehäuse bezeichnet. Das Gehäuse 10 weist einen spitz-konischen Mantelteil 12 auf, an den sich ein flach-konischer Endteil 14 anschließt. Der Endteil 14 bildet eine Öffnung 16. Um die Öffnung 16 herum ist von der Innenwandung des Gehäuses 10 eine flach-konische Sitzfläche 18 gebildet. An dem weiteren Ende des Mantelteils 12 ist as Gehäuse 10 durch einen Deckelteil 20 abgeschlossen. Der Deckelteil 20 weist einen zentralen Durchbruch 22 auf, der von einem Kragen 24 umgeben ist. Auf dem Kragen 24 sitzt ein Antriebsmotor 26 mit Getriebe. Mit 28 ist die Welle des Antriebsmotors 26 bezeichnet. Auf der Welle 28 sitzt eine Hülse 30, die an ihrem Ende einen Innensechskant 32 bildet (Fig.10). Die Hülse 30 bildet einen Teil einer noch zu beschreibenden Kugelsechskantkupplung.

In dem Gehäuse 10 ist ein Zwischenteil 34 angeordnet. Das Zwischenteil 34 weist eine flachkonische Mantelfläche 36 auf. Mit dieser Mantelfläche 36 ist das Zwischenteil 34 auf die Sitzfläche 18 an der Innenwandung des Gehäuses 10 aufsetzbar. Das Zwischenteil 34 weist einen Randabschnitt 38 auf, dessen Mantelfläche spitz-konisch und dessen Innenfläche zylindrisch ist und eine Ringschulter 40 bildet. Anschließend an die Ringschulter 40 ist in dem Zwischenteil 34 eine Ausnehmung 42 gebildet. In der zylindrischen Innenfläche des Randabschnitts 38 und auf der Ringschulter 40 des Zwischenteils 34 sitzt ein Wälzlager 44. Das Wälzlager 44 ist durch einen im Querschnitt L-förmigen Sicherungsring 46 gehalten. Der Sicherungsring 46 ist auf den Randabschnitt 38 aufgesetzt. Der Sicherungsring bildet eine radiale Ringfläche 48. Über den Sicherungsring 46 greifen an dem Zwischenglied 34 drei um 120° gegeneinander winkelversetzte, federnde Druckglieder 50 an. In Fig.1 ist nur eines dieser Druckglieder 50 sichtbar. Jedes der Druckglieder 50 enthält eine Stange 52, die axial beweglich geführt ist. Die Stange 52 trägt an ihrem Ende einen Tastkopf 54. Jede Stange 52 ist von einer vorgespannten Schraubenfeder 56 umgeben. Die Schraubenfeder 56 ist an dem Deckelteil 20 des Gehäuses 10 und an dem Tastkopf 54 abgestützt. Die Druckglieder 50 suchen das Zwischenteil 34 mit seiner Mantelfläche 36 auf die Sitzfläche 18 des Gehäuses 10 zu drücken.

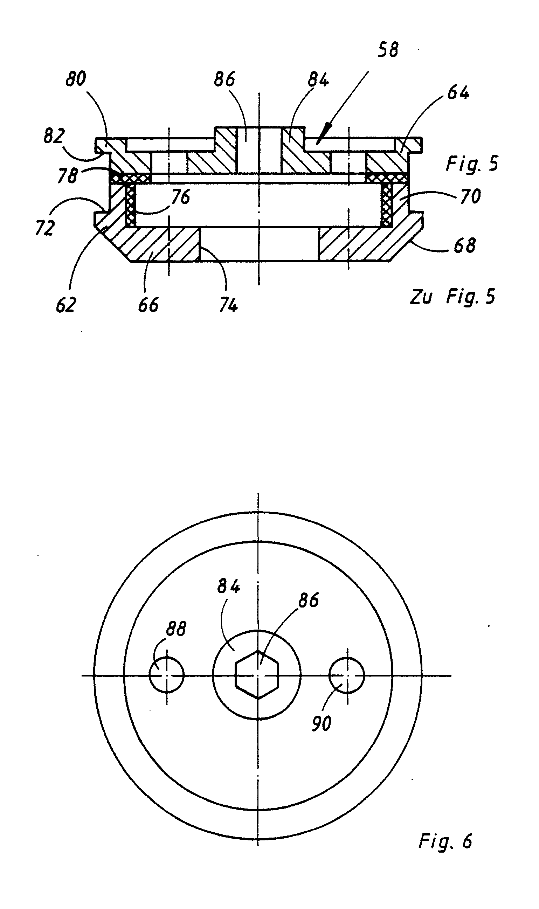

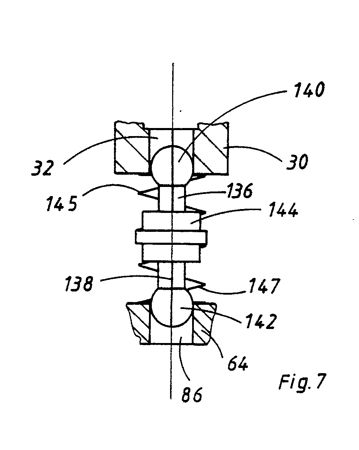

In dem Wälzlager 44 ist die antriebseitige Kupplungshälfte 58 einer drehimpulsaufnehmenden Kupplung 60 drehbar gelagert. Die antriebseitige Kupplungshälfte ist als flaches Gehäuse mit einem schalenförmigen Unterteil 62 und einem Deckelteil 64 ausgebildet. Die antriebseitige Kupplungshälfte 58 ist in Fig.5 im Schnitt dargestellt. Das Unterteil 62 weist einen Boden 66 mit konischer Mantelfläche 68 auf. An den Boden 66 schließt sich ein Randteil 70 an. Der Randteil 70 bildet auf seiner Außenfläche eine Ringschulter 72. In dem Boden 66 ist ein zentraler Durchbruch 74 vorgesehen. In der Innenfläche des Randteils 70 ist ein Gleitlager 76 gehalten. Auf der Stirnfläche des Randteils sitzt ein Gleitring 78. Auf dem Gleitring sitzt das Deckelteil 64. Das Deckelteil 64 weist einen überstehenden Rand 80 auf, welcher auf seiner dem Unterteil zugewandten Unterseite eine Ringschulter 82 bildet. Wie aus Fig.6 ersichtlich ist, weist das Deckelteil 64 einen zentralen Vorsprung 84 auf seiner Oberseite auf. Durch den Vorsprung 84 und das Deckelteil 64 erstreckt sich ein im Querschnitt sechseckiger Durchbruch 86. Das Deckelteil 64 weist zwei diametral gegenüberliegende Bohrungen 88,90 auf. Zwei Schrauben 92 und 94 erstrecken sich durch die Bohrungen 88 bzw. 90. Die Schrauben 92 und 94 sind in Gewindebohrungen des Unterteils 62 eingeschraubt. Diese Schrauben 92 und 94 verbinden die beiden Teile 62 und 64 der antriebseitigen Kupplungshälfte 58. Die Schrauben 92 und 94 dienen aber auch als Mitnahmeglieder der Kupplung 60.

Die gehäuseartige antriebseitige Kupplungshälfte 58 umschließt eine abtriebseitige Kupplungshälfte 96. Die abtriebseitige Kupplungshälfte 96 ist eine Scheibe 98, welche an Werkzeughalterungsmittel 100 in Form einer Hülse 102 angeformt ist. Die Scheibe 98 weist zwei diametral gegenüberliegende, in bezug auf die Achse zentralsymmetrische, bogenförmige Durchbrüche 104 und 106 auf. Mit ihrer Mantelfläche 108 ist die Scheibe 98 in dem Gleitlager 76 der antriebseitigen Kupplungshälfte 58 drehbar gelagert. Der Rand der Stirnfläche der abtriebseitigen Kupplungshälfte 96 liegt an dem Gleitring 78 an. Die Stirnfläche der abtriebseitigen Kupplungshälfte 96 liegt daher nicht an dem Deckelteil 64 an. Außerdem sind die von einer Hülse gebildeten Werkzeugaufnahmemittel 100 über ein Wälzlager 101 in dem Zwischenteil 34 gelagert.

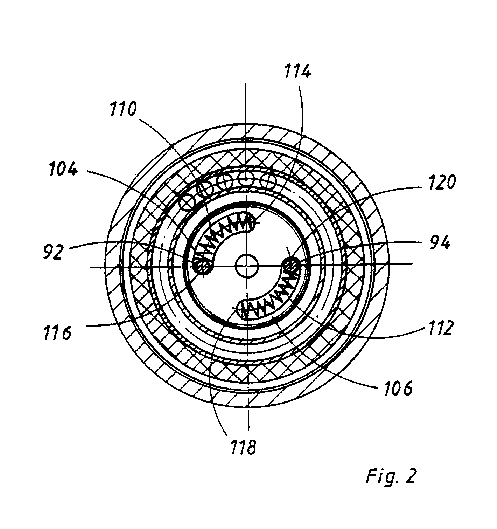

Wie aus Fig.2 ersichtlich ist, liegen in den bogenförmigen Durchbrüchen 106 und 106 vorgespannte Schraubenfedern 110 bzw. 112. Die Schraubenfedern 110 und 112 liegen einerseits an den als Mitnahmeglieder wirkenden Schrauben 92 bzw. 94 der antriebseitigen Kupplungshälfte 58 und andererseits an den Endwandungen 114 bzw 116 der bogenförmigen Durchbrüche 104 bzw. 106 an. Unter dem Einfluß der vorgespannten Schraubenfedern 110 und 112 werden die gegenüberliegenden Endwandungen 118 bzw. 120 in Anlage an den Schrauben 92 bzw. 94 gehalten. Die abtriebseitige Kupplungshälfte 96 wird von der antriebseitigen Kupplungshälfte 58 entgegen dem Uhrzeigersinn in Fig.2 unmittelbar über die Schrauben 92 und 94 und die Endflächen 118 bzw. 120 mitgenommen. Im Uhrzeigersinn erfolgt die Mitnahme über die vorgespannten Schraubenfedern 110 und 112. An der relativen Lage der beiden Kupplungshälften 58 und 96 ändert sich dabei nichts, solange nicht das übertragene Drehmoment die Vorspannung der Schraubenfedern 110 und 112 überwindet.

Die drehimpulsaufnehmende Kupplung 60 ist in dem Wälzlager 44 drehbar gelagert. Dabei sitzt das Wälzlager 44 zwischen der Schulter 72 des Unterteils 62 und der Schulter 82 des Deckelteils.

Die Kupplung 60 ist mit der Welle 28 des Antriebsmotors 26 über eine Kugelsechskantkupplung 124 gekuppelt. Die Kugelsechskantkupplung 124 ist in Fig.7 im einzelnen dargestellt. Die Kugelsechskantkupplung 124 enthält eine Kardanwelle 126, die in Fig.8 einzeln, teilweise im Schnitt, dargestellt ist. Die Kardanwelle 126 enthält zwei untereinander gleiche Teile 128 und 130. Die Teile 128 und 130 haben sechskantigen Querschnitt. Jeder Teil weist einen im Querschnitt sechskantigen Fuß 132 bzw. 134, einen Schaft 136 bzw. 138 und einen Kopf 140 bzw 142 auf. Die Füße 132 und 134 liegen aneinander an und sind von einem Ring 144 umgeben. Der Ring 144 bildet einen Innensechskant 146 (Fig.9). Die Köpfe haben sechskantigen Querschnitt.

Die Kanten liegen jedoch jeweils auf einer Kugel. Es erfolgt somit eine Mitnahme über das Sechskantprofil, jedoch ist eine Verschwenkung gegenüber einer Sechskantführung, in welcher der jeweilige Kopf geführt ist, möglich. Der Ring 144 ist durch Federn 145,147 zentriert

Der Kopf 140 ist in dem Innensechskant 32 der Hülse 30 geführt. Der Kopf 142 ist in dem sechsekkigen Durchbruch 86 der antriebseitigen Kupplungshälfte 60 geführt. Die antriebseitige Kupplungshälfte 60 wird daher von der Welle 28 über die Kugelsechskantkupplung 124 angetrieben. Die Kugelsechskantkupplung 124 mit der Kardanwelle 126 gestattet dabei sowohl eine seitliche Bewegung der antriebseitigen Kupplungshälfte 60 zusammen mit dem Zwischenteil 38 als auch eine Winkelbewegung. Die Werkzeugaufnahmemittel 100 mit dem (nicht dargestellten) Lehrdorn können sich daher nach der Position und Orientierung des Werkstückgewindes ausrichten.

Die Bewegung der Stangen 52 wird durch Fühler in Form von Linearpotentiometern 150 abgegriffen. Aus den Signalen der Linearpotentiometer 150 lassen sich Informationen über die Position und Orientierung des Werkstückgewindes ableiten. Das Drehmoment kann aus dem Motorstrom des Antriebsmotors abgeleitet werden. Es erfolgt eine Begrenzung dieses Drehmoments, indem bei Erreichen eines vorgegebenen Motorstromes, der etwa einem Drehmoment von 2 bis 10 Ncm die Drehrichtung des Antriebsmotors 26 umgekehrt wird. Der Lehrdorn wird dann wieder aus dem Werkstückgewinde herausgeschraubt. An der Welle 28 des Antriebsmotors 26 ist ein (in Fig.1 nicht sichtbarer) Winkelencoder vorgesehen, welcher die jeweilige Lage des Lehrdornes in dem Werkstückgewinde wiedergibt. Gewindestifte 151 begrenzen den Hub des Zwischenteils.

Die Öffnung 16 ist durch eine Manschette 152 abgeschlossen. Die Manschette 152 bewirkt gleichzeitig eine Zentrierung des Zwischenteils 34 zu dem Gehäuse 10.

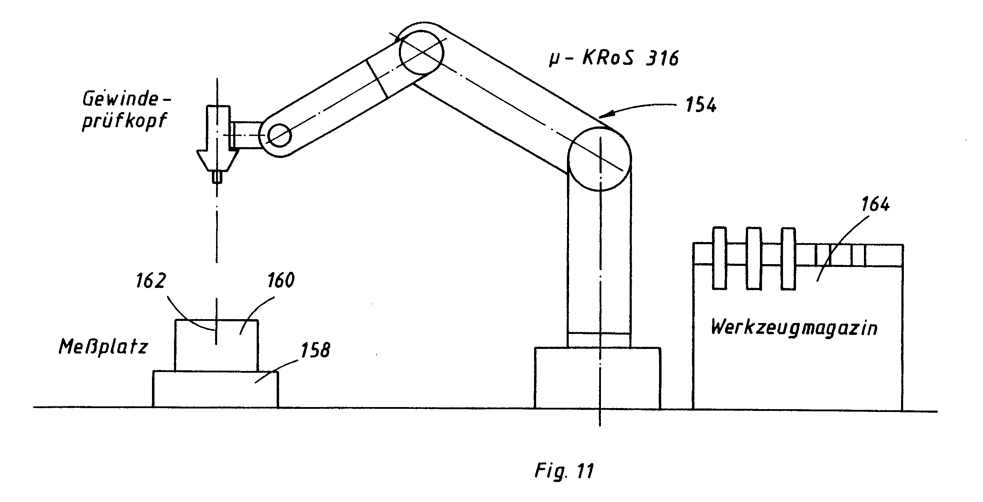

Fig.11 veranschaulicht die Anwendung der beschriebenen Gewindeprüfeinrichtung in Verbindung mit einem Roboter 154. Der Roboter 154 führt die Gewindeprüfeinrichtung, die hier als Ganzes mit 156 bezeichnet ist, zu einem Meßplatz 158 mit einem Werkstück 160, das eine zu prüfende Gewindebohrung 162 aufweist. Mit 164 ist ein Werkzeugmagazin bezeichnet. In diesem Werkzeugmagazin sind verschiedene Lehrdorne abgelegt. Der Roboter 154 kann nach einem vorgegebenen Programm die jeweils erforderlichen Lehrdorne diesem Werkzeugmagazin 164 entnehmen.

Die beschriebene Gewindeprüfeinrichtung bietet wesentliche Vorteile:
Die umlaufenden Massen sind im Vergleich zum Stand der Technik gering und haben ein geringes Trägheitsmoment. Dadurch wird der Drehimpuls gering gehalten.

Wenn das übertragene Drehmoment infolge dieses Drehimpulses beim Einschrauben des Lehrdornes (im Uhrzeigersinn von Fig.2) und Auftreten eines erhöhten Widerstandes ein vorgegebenes Maß überschreitet, dann wird die Vorspannung der Schraubenfedern 110 und 112 überschritten. Die Schrauben 92 und 94 heben von den Endwandungen 116 bzw. 118 der bogenförmigen Durchbrüche 104 bzw. 106 der abtriebseitigen Kupplungshälfte 96 ab. Dadurch wird der Drehimpuls von den Schraubenfedern 110 und 112 aufgenommen. Es kann kein Festziehen des Lehrdornes in dem Werkstückgewinde erfolgen. Beim Herausschrauben des Lehrdornes aus dem Werkstückgewinde (entgegen dem Uhrzeigersinn in Fig.2) liegen die Schrauben 92,94 der antriebseitigen Kupplungshälfte 60 unter dem Einfluß des ausgeübten Drehmoments an den Endwandungen 116 bzw. 118 der Durchbrüche 104 bzw. 106 an. Beim Ausschrauben erfolgt also keine Begrenzung des übertragenen Drehmoments.

Die Kugelsechskantkupplung 124 gestattet seitliche, winkelmäßige und axiale Bewegungen des Lehrdornes. Es kann auf diese Weise erreicht werden, daß ein Drehmoment nur um die Längsachse des Werkstückgewindes übertragen wird.

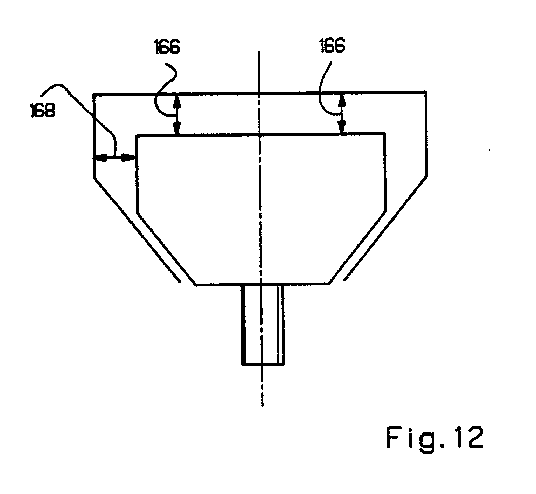

In Fig.12 ist schematisch eine Abwandlung dargestellt, welche es gestattet, die Lage der zu prüfenden Gewindebohrung festzustellen und zu registrieren. Die axiale Position des Zwischenteils 34 wird einmal durch die drei Linearpotentiometer 150 festgestellt, die jeweils um 120° gegeneinander winkelversetzt sind. Das ist in Fig.12 durch die mit 166 bezeichneten Pfeile angedeutet. Außerdem sind drei ebenfalls um jeweils 120° gegeneinander winkelversetzte Fühler vorgesehen, welche auf seitliche Bewegungen des Zwischenteils 34 ansprechen. Diese Fühler sind in Fig.12 durch einen Pfeil 168 angedeutet.

Die beschriebene Gewindeprüfeinrichtung gestattet die Prüfung kleinerer Gewinde, als dies mit der eingangs geschilderten, bekannten Gewindeprüfeinrichtung möglich ist.

**Patentansprüche**

1. Gewindeprüfeinrichtung zur Prüfung von Innengewinden mittels eines in das Innengewinde einzuschraubenden Gewindewerkzeugs, enthaltend

   (a) ein Gehäuse (10),

   (b) Werkzeughalterungsmittel (100) zur Halterung des Gewindewerkzeugs, die drehbar und winkelmäßig ausrichtbar gelagert sind,

   (c) einen Antriebsmotor (26),

   (d) ein Getriebe (124), über welches der Antriebsmotor (26) mit den Werkzeughalterungsmitteln (100) gekuppelt ist und welches die Ausrichtung der Werkzeughalterungsmittel (100) zuläßt, und

(e) Mittel zur Messung des von dem Antriebsmotor (26) über das Getriebe (124) und die Halterung auf das Gewindewerkzeug übertragenen Drehmoments,

**dadurch gekennzeichnet, daß**

(f) die Werkzeughalterungsmittel (100) über eine Kupplung (60) mit dem Antriebsmotor (26) gekuppelt sind, welche bei einer dem Einschraubvorgang entsprechenden Drehbewegung bei Überschreiten eines vorgegebenen Drehmoments federnd nachgibt und dadurch den Drehimpuls der umlaufenden Teile federnd aufnimmt.

2. Gewindeprüfeinrichtung nach Anspruch 1, **dadurch gekennzeichnet, daß**
   (a) die Kupplung (60) drehbar in einem Zwischenteil (34) gelagert ist,
   (b) das Zwischenteil (34) ausrichtbar in dem Gehäuse (10) abgestützt ist und
   (c) eine antriebseitige Kupplungshälfte (58) der Kupplung (60) über das Getriebe (124) ausrichtbar mit dem Antriebsmotor (26) verbunden ist.

3. Gewindeprüfeinrichtung nach Anspruch 2, **dadurch gekennzeichnet, daß** das Getriebe (124) eine Kugelsechskantkupplung ist.

4. Gewindeprüfeinrichtung nach Anspruch 2 oder 3, **dadurch gekennzeichnet, daß**
   (a) das Gehäuse (10) sich werkzeugseitig konisch verjüngt und auf seiner Innenseite eine konische Sitzfläche (18) bildet,
   (b) das Zwischenteil (34) mit einer entsprechend konischen Außenfläche (36) auf die konische Sitzfläche (18) des Gehäuses (10) aufsetzbar ist und
   (c) an dem Zwischenteil (34) federnde Druckglieder (50) angreifen, welche das Zwischenteil (34) an die konische Sitzfläche (18) anzudrücken suchen.

5. Gewindeprüfeinrichtung nach Anspruch 4, **dadurch gekennzeichnet, daß** die federnden Druckglieder (50) von verschiebbar in dem Gehäuse (10) geführten Stangen (52) gebildet sind, die jeweils mit einem verdickten Tastkopf (54) an dem Zwischenteil (34) anliegen und die von vorgespannten Schraubenfedern (56) umgeben sind, welche sich an einem Widerlager im Gehäuse (10) und an den Tastköpfen (54) abstützen.

6. Gewindeprüfeinrichtung nach einem der Ansprüche 1 bis 5, **dadurch gekennzeichnet, daß** die federnd nachgiebige Kupplung
   (a) eine abtriebseitige Kupplungshälfte (96) in Form einer drehbar gelagerten Scheibe (98) aufweist, welche um die Drehachse herum bogenförmige Durchbrüche (104,106) aufweist, sowie
   (b) eine antriebseitige Kupplungshälfte (58) mit Mitnahmegliedern (92,94), welche durch die bogenförmigen Durchbrüche (104,106) der abtriebseitigen Kupplungshälfte (96) hindurchragen, und
   (c) vorgespannte Federglieder (110,112), welche sich an der abtriebseitigen Kupplungshälfte (96) abstützen und die Mitnahmeglieder (92,94) der antriebseitigen Kupplungshälfte (58) in federnder Anlage an jeweils einer Endwandung (116,120) der bogenförmigen Durchbrüche (104,106) halten.

7. Gewindeprüfeinrichtung nach Anspruch 6, **dadurch gekennzeichnet daß**
   (a) die antriebseitige Kupplungshälfte (58) ein flaches Gehäuse bildet, welches die abtriebseitige Kupplungshälfte (96) umschließt und zwischen dessen Stirnflächen sich die Mitnahmeglieder (92,94) erstrecken,
   (b) das Gehäuse in dem Zwischenteil (34) über ein Wälzlager (44) drehbar gelagert ist und
   (c) die abtriebseitige Kupplungshälfte (96) in dem flachen Gehäuse über Gleitlager (76) gelagert ist.

8. Gewindeprüfeinrichtung nach Anspruch 7, **dadurch gekennzeichnet, daß** die abtriebseitige Kupplungshälfte (96) von einer angeformten Scheibe (98) an den Werkzeughalterungsmitteln (100) gebildet ist.

9. Gewindeprüfeinrichtung nach Anspruch 8, **dadurch gekennzeichnet, daß** die Werkzeughalterungsmittel (100) in dem Zwischenstück (34) in einem Wälzlager (101) gelagert sind.

10. Gewindeprüfeinrichtung nach Anspruch 2, **dadurch gekennzeichnet, daß** Fühler (150) zum Abgreifen der Bewegung des Zwischenteils (34) relativ zu dem Gehäuse (10) vorgesehen sind.

Fig. 1

Fig. 2

Fig. 3

Fig. 4

Fig. 5

Zu Fig. 5

Fig. 6

Fig. 7

Fig. 8

Fig. 9

Fig. 10

Gewinde-
prüfkopf

µ – KRoS 316

154

162   160

Meßplatz

158

Werkzeugmagazin

164

Fig. 11

EP 0 459 262 A2

Fig. 12